# EUROPEAN PATENT APPLICATION

(11) **EP 4 813 943 A1**
(43) Date of publication of application: **30.09.2026**
(21) Application number: 26165386.9
(22) Date of filing: 17.03.2026
(51) Int. Cl.: C04B 24/16, C04B 28/02, C04B 40/00, C04B 103/14

(54) **POLYMERIC DISPERSANT, CRYSTAL-NUCLEUS-TYPE EARLY STRENGTH AGENT SUSPENSION AND REDISPERSIBLE CRYSTAL-NUCLEUS-TYPE EARLY STRENGTH POWDER, AND PREPARATION METHODS AND USE THEREOF**

(30) Priority: 19.03.2025 CN 202510329680
(71) Applicant: Shijiazhuang Chang'an Yucai Building Materials Co., Ltd., 051431 Hebei (CN); Sichuan Tong'dao Technology Co., Ltd., 610299 Sichuan (CN)
(72) Inventor: WANG, Jinchun, Hebei (CN); FANG, Tao, Hebei (CN); WU, Wei, Hebei (CN); LIU, Zhaoyang, Hebei (CN); NG GEOK BEE, Serina, Hebei (CN); DONG, Shuqiang, Hebei (CN); KANG, Jing, Hebei (CN); LI, Xixi, Hebei (CN); WANG, Yuqian, Sichuan (CN); GRUBER, Mirko, Sichuan (CN); WANG, Yongmei, Hebei (CN)
(74) Representative: Pons IP

(57) **Abstract**

Provided are a polymeric dispersant, a crystal-nucleus-type early strength agent suspension and a redispersible crystal-nucleus-type early strength powder, and preparation methods and use thereof, belonging to the technical field of concrete admixtures. Compared with the conventional technology, the crystal-nucleus-type early strength powder suspension prepared from the polymeric dispersant of the present disclosure exhibits significantly improved dispersion stability, is free of the phenomena of aggregation and sedimentation after being left to stand for four months, and also show significantly enhanced early strength properties. The redispersible crystal-nucleus-type early strength powder can be quickly and uniformly redispersed in a cement-based material and has significantly improved early-age strength. The crystal-nucleus-type early strength agent suspension and the redispersible crystal-nucleus-type early strength powder are simple in preparation process, have no influence on later-age strength and durability, and are resistant to storage and stable in performance, which are suitable for mass industrial production and engineering applications.

## Description

### TECHNICAL FIELD

The present disclosure relates to the technical field of concrete admixtures, in particular to a polymer dispersant, a crystal-nucleus-type early strength agent suspension and a redispersible crystal-nucleus-type early strength powder, and preparation methods and use thereof.

### BACKGROUND

In recent years, global climate change is growing increasingly severe, and carbon emissions pose a significant challenge to humankind. The cement industry is an important basic industry of the national economy in China, and is also a major field harboring energy consumption and carbon dioxide emissions. In order to promote transformation for energy conservation and carbon emission reduction in the cement industry and reduce the carbon dioxide emissions of cementitious materials, it is normal practice to partially replace cement with auxiliary cementitious materials (SCMs), such as fly ash, slag, silica fume and calcined clay, which, however, tend to affect the early hydration of concrete, thereby resulting in a decrease in the strength of the concrete.

Traditional methods for improving the early-age strength of concrete, such as increasing the amount of cement used, increasing the fineness of the cement and performing steam curing, not only bring about influence on the workability of the concrete and an increase in costs, but also destroy the internal structure of the concrete and result in strength retrogression, leading to the problems of proneness to cracking, and high energy consumption, etc. To address problems regarding the early-age strength of the cement, a variety of early strength agents have been developed to accelerate the hydration of the cement. Traditional early strength agents include inorganic salts such as chlorides, sulfates and silicates, organic substances such as calcium formate, triethanolamine and triisopropanolamine, and inorganic-organic composite early strength agents. Although being capable of improving the early-age strength of cement-based materials, traditional early strength agents generally have poor early strength effect, and even have significant influence on the later-age strength of the cement-based materials. In addition, traditional early strength agents can also bring about a great number of drawbacks including degradation in the workability and durability of the cement-based materials, accelerated corrosion of steel, alkali-aggregate reactions, efflorescence, etc. Therefore, a major challenge to be tackled is to develop new materials that can effectively improve the early-age strength of the cement-based materials without adversely affecting the later-age strength and durability thereof.

With the rapid development of nanomaterials, nanoparticles have provided a new approach to accelerate the hydration of the cement-based materials. By introducing nanoparticles into the cement-based materials, more nucleation sites can be provided for a cement hydration product, i.e., a calcium silicate hydrate (C-S-H) gel, thereby effectively reducing the nucleation barrier of the C-S-H gel, accelerating the hydration rate of the cement, and improving the early-age strength of the cement without affecting the later-age strength and durability thereof. Many nanomaterials such as SiO₂, TiO₂ and Al₂O₃ can all serve as seed crystals for heterogeneous nucleation to provide more nucleation sites, thereby accelerating the formation of the C-S-H gel. Among various nanocrystalline crystal nucleus materials, synthetic calcium silicate hydrate C-S-H nanoparticles have the same chemical composition as the cement hydration product C-S-H gel, and will not change the chemical composition of a pore solution of cement paste; thus, it is an excellent nucleation matrix for the C-S-H gel. Compared with other nanoparticles, synthetic C-S-H nanoparticles have a more significant promotion effect on the amount of released heat and the heat release rate during early-age hydration of the cement and allows for a faster development of the early-age strength of the cement, thus becoming a research hotspot in recent years.

With a nano-sized C-S-H suspension in the conventional technology as an example, the problems of aggregation and sedimentation of the nano-sized C-S-H suspension are solved by adding dispersion stabilizers having the molecular structures of chain-structured macromolecular soluble polysaccharide and modified polycarboxylic acid dispersants. However, it has been found in practical applications that such dispersion stabilizers will affect the early-age hydration of the cement-based materials and inhibit the early strength effect of the nano-sized suspension. A powder prepared from the nano-sized C-S-H suspension generally has significantly reduced early strength effect compared with the suspension. Although in the conventional technology, C-S-H powders have been modified by adding a water-soluble non-polymeric sulfonic acid compound and a calcium compound, it is still difficult to be uniformly dispersed in the cement-based materials. Moreover, a powder obtained by drying the nano-sized C-S-H suspension has been found to still have greatly reduced early strength performance during engineering applications.

### SUMMARY

An object of the present disclosure is to provide a polymeric dispersant, a crystal-nucleus-type early strength agent suspension and a redispersible crystal-nucleus-type early strength powder, and preparation methods and use thereof. The crystal-nucleus-type early strength agent suspension provided in the present disclosure is not prone to aggregation and sedimentation, and has high early strength properties. The crystal-nucleus-type early strength powder prepared from the suspension can be quickly and uniformly redispersed in a cement-based material, and exhibits good early strength properties at a low dosage.

To achieve the above object of the present disclosure, the present disclosure provides the following technical solutions.

A polymeric dispersant, which is prepared from raw materials including, in parts by mass: 300-500 parts of a polyether monomer, 40-50 parts of acrylic acid, 15-20 parts of 2-acrylamido-2-methylpropanesulfonic acid, 1.0-1.5 parts of a free radical initiator, 0.6-1.0 part of a reducing agent, 2.0-3.2 parts of a chain transfer agent, 1.0-1.5 parts of a defoamer, 60-80 parts of a pH regulator, and 600-850 parts of water.

In some embodiments, the polyether monomer is isopentenyl polyoxyethylene ether or ethylene glycol monovinyl polyvinyl alcohol ether; and the polyether monomer has a weight-average molecular weight of 5,000 to 6,000.

In some embodiments, the chain transfer agent is mercaptopropionic acid; the initiator is a peroxide; the reducing agent is an organic acid reducing agent; the pH regulator is a sodium hydroxide solution; the water is deionized water having a conductivity less than 30 µs/cm; and the defoamer is a polyether defoamer or a polyether-modified organosilicon defoamer.

The present disclosure further provides a crystal-nucleus-type early strength agent suspension, which is prepared from raw materials including, in parts by mass: 80-100 parts of the polymeric dispersant as described in the above technical solution, 20-30 parts of a stabilizer, 0.1 parts of a defoamer, 4-6 parts of sodium metaaluminate, 80-100 parts of a soluble silicate, 140-180 parts of a soluble calcium salt, and 600-700 parts of water, wherein the stabilizer is polyethylene glycol.

In some embodiments, the polyethylene has a weight-average molecular weight of 10,000-12,000.

In some embodiments, the soluble silicate is one or more selected from the group consisting of sodium silicate, sodium metasilicate and potassium silicate; and the soluble calcium salt is one or more selected from the group consisting of calcium nitrate, calcium nitrite and calcium formate.

The present disclosure further provides a redispersible crystal-nucleus-type early strength powder, which is prepared from the crystal-nucleus-type early strength agent suspension as described in the above technical solution and an enhancer, wherein the enhancer is an alcohol-amine composite enhancer.

In some embodiments, a mass ratio of the crystal-nucleus-type early strength agent suspension to the enhancer is in a range of 98-99 : 1-2.

The present disclosure also provides a method for preparing the redispersible crystal-nucleus-type early strength powder as described in the above technical solution, including the following steps: mixing the crystal-nucleus-type early strength agent suspension with the enhancer to obtain a mixture, and drying the mixture to obtain the redispersible crystal-nucleus-type early strength powder, wherein the drying includes one selected from the group consisting of spray freeze drying, spray hot-air drying and fluid bed drying.

The present disclosure also provides use of the crystal-nucleus-type early strength agent suspension as described in the above technical solution, the redispersible crystal-nucleus-type early strength powder as described in the above technical solution or the redispersible crystal-nucleus-type early strength powder prepared by the method as described in the above technical solution in concrete or mortar.

The present disclosure provides the polymeric dispersant, which is prepared from raw materials including, in parts by mass: 300-500 parts of a polyether monomer, 40-50 parts of acrylic acid, 15-20 parts of 2-acrylamido-2-methylpropanesulfonic acid, 1.0-1.5 parts of a free radical initiator, 0.6-1.0 part of a reducing agent, 2.0-3.2 parts of a chain transfer agent, 1.0-1.5 parts of a defoamer, 60-80 parts of a pH regulator, and 600-850 parts of water. The polymeric dispersant provided in the present disclosure is of a comb-like structure mainly consisting of an anionic polymer backbone and polyethylene oxide side chains, wherein anionic groups on the backbone undergo coordinative adsorption, by means of electrostatic action, with calcium ions complexed to surfaces of hydrated calcium silicate nanoparticles, and the side chains provide steric hindrance to prevent the nanoparticles from mutual attraction and aggregation and retain the dispersion stability of the nanoparticles. A macromolecular polycarboxylic acid dispersant having a molecular structure with a high acid-ether ratio, long side chains and a short backbone is synthesized. The polymer with a high acid-ether ratio has strong adsorption capacity, making it possible to show the steric hindrance effect of the long side chains. Moreover, the polymer has a short backbone structure, thereby avoiding compromised dispersion capability caused by spatial coiling of long backbone molecules and adsorption of multiple nanoparticles. In the case of an excess of the polymeric dispersant in the crystal-nucleus-type early strength agent suspension, carboxylate ions in the dispersant act to retard the progress of cement hydration, and will strongly bind to Ca²⁺ on the surfaces of cement clinker particles and wrap up clinker to suppress the dissolution of cement particles, thereby suppressing the development of early-age strength of cement-based materials. 2-acrylamido-2-methylpropanesulfonic acid (AMPS) contains two functional groups, i.e., an amido group and a sulfonic acid group, wherein the sulfonic acid group (-SO₃H) is a strong acid functional group that can be completely ionized in an aqueous solution into -SO₃²⁻ anions, and has no influence on the amount of anions in the polymeric dispersant. The retarding effect of the dispersant on cement hydration is mainly attributed to carboxylate ions, and sulfonate ions in AMPS have little retarding effect on cement hydration. By partially replacing acrylic acid with AMPS, amido and sulfonic acid groups in AMPS can react with Ca(OH)₂ in a hydration product to yield a precipitate, which accelerates the hydration of C₃S and C₃A, thereby increasing the number of C-S-H and promoting the development of the early-age strength of the cement-based materials. The polycarboxylic acid dispersant is designed to have a molecular structure with a high acid-ether ratio, long side chains and a short backbone and to be modified with amido and sulfonic acid groups in the functional monomer 2-acrylamido-2-methylpropanesulfonic acid, making the dispersant exhibit good dispersing characteristics at a low dosage, reduce the particle size of the crystal-nucleus-type early strength agent suspension, and improve dispersion stability, thereby promoting the development of early-age strength.

The present disclosure provides the crystal-nucleus-type early strength agent suspension, wherein a nonionic polymer polyethylene glycol containing both hydroxyl and ether bond hydrophilic groups but no hydrophobic groups is blended, which is well soluble in water, and polyethylene glycol is very stable and not susceptible to the impacts of electrolytes, acids and bases. The polyethylene glycol is adsorbed to defect sites of a silica tetrahedral chain of calcium silicate hydrate by means of hydrogen bonding or Van der Waals forces, and thus a macromolecular hydrophilic film is formed to wrap up nanoparticles, thereby forming a steric hindrance effect, weakening the attractive force between the nanoparticles, and improving dispersion stability. Further, the polyethylene glycol of a linear structure intercalates between layers of the nanoparticles, thereby increasing the interlayer spacing and improving the specific surface area, which will loosen the pore structure of calcium silicate hydrate and thus enhances the dissolving properties of a solid crystal-nucleus-type early strength agent. The dispersion stability of the crystal-nucleus-type early strength agent suspension is related to the molecular weight and concentration of polyethylene glycol. In the case that the polyethylene glycol has an excessively high molecular weight, the cross-linking between nanoparticles increases, resulting in that the viscosity increases, which leads to the aggregation of nanoparticles, and the increase of the particle size. In the case that the polyethylene glycol has an excessively low molecular weight, it is difficult to overcome Van der Waals forces because the molecular chain is too short, making it impossible to form an effective steric barrier to prevent aggregation of the nanoparticles. By virtue of the strong alkalinity of sodium metaaluminate, the pH value of the suspension is increased, and therefore the surfaces of the C-S-H nanoparticles carry more negative charges, the dispersion stability is enhanced, and the hydration of cement particles can also be accelerated to promote the formation of a C-S-H gel and shorten coagulation time; thus, the strong alkalinity of sodium metaaluminate could not only disperse C-S-H nanoparticles, but also catalyze hydration reactions, both of which work together to improve early strength properties. Moreover, by controlling a calcium-to-silicon ratio in the crystal-nucleus-type early strength agent suspension, the degree of silicon chain polymerization of synthesized nanometer calcium silicate hydrate is reduced, and defect sites appear since silicon in bridging units in the molecular structure disappears, which are conducive to the adsorption of a stabilizer and the suppression of the aggregation of nanoparticles. Furthermore, changes in interlayer spacing are beneficial for the intercalation of the dispersion stabilizer, thereby improving the dispersion stability of the nanoparticles. Within a certain range, a larger calcium-silica ratio causes the morphology of nanometer calcium silicate hydrate to gradually change from a spherical and fibrous co-polymer to tin-foil-shaped nanoparticles, which has a more obvious promotion effect on cement hydration, thereby helping to improve the early strength properties of the dried powdery crystal-nucleus-type early strength agent. The nanometer crystal-nucleus-type early strength agent suspension prepared in the present disclosure has good dispersion stability, high early-age strength, and a particle size less than 200 nm, and the sedimentation thereof is not more than 0.2% after storage for four months.

The present disclosure provides a redispersible crystal-nucleus-type early strength powder, which, in use, has a nucleation effect on nanometer C-S-H and can significantly accelerate the hydration reaction of cement and shorten the induction period of cement hydration. The early-age hydration of cement is accelerated by providing nucleation sites to promote the rapid formation of a C-S-H gel. Moreover, the alcohol-amine enhancer in the redispersible crystal-nucleus-type early strength powder of the present disclosure can be complexed with metal ions in a mineral phase of cement to form a large number of soluble regions, thereby increasing the diffusion rate of a hydration product, promoting the conversion of AFt (i.e., high sulfate calcium sulphoaluminate hydrate) to AFm (i.e., monosulfate calcium sulphoaluminate hydrate) and producing more calcium hydroxide. The alcohol-amine enhancer can also activate the pozzolanic reaction of coal ash and accelerate the dissolution of activated alumina and silica of coal ash in a pore fluid, thereby releasing free aluminum and silicon and generating additional C-S-H gels. The synergistic effect of nanometer C-S-H and alcohol-amine promotes the reaction of the cementitious material of cement with coal ash, accelerates the formation of C-S-H gels and Aft and improves the early-age strength.

The present disclosure also provides a method for preparing the redispersible crystal-nucleus-type early strength powder. In the present disclosure, a solid redispersible crystal-nucleus-type early strength powder is prepared by drying the crystal-nucleus-type early strength agent suspension. The electrostatic repulsion and steric hindrance effect of the polymeric dispersant in the suspension help to achieve good dispersion of nanometer calcium silicate hydrate. Moreover, the stabilizer polyethylene glycol only contains two hydrophilic groups, i.e., an ether group and a hydroxyl group, and does not contain any hydrophobic group, the stabilizer polyethylene glycol is adsorbed on the surfaces of dispersed calcium silicate hydrate nanoparticles to form a layer of a macromolecular hydrophilic film, which wraps up the nanoparticles to achieve a steric hindrance effect.

Further, when a spray freeze drying process is used in the present disclosure, the relationship between the properties of water and surface energy and temperature is made full use of. When water in a well-dispersed nanoparticle suspension and the macromolecular hydrophilic film that wraps up the surfaces of the nanoparticles are frozen into ice, the swelling force of water during phase change causes the calcium silicate hydrate nanoparticles to form tiny ice crystals after effective dispersion. In a freeze-drying stage, water in the ice crystals turns into gaseous from solid under the action of heating and sublimation and then escapes, leaving channels, which increases the specific surface area of the particles, and therefore the powder has higher solubility and dispersibility, and a fast-dissolving porous powdery crystal-nucleus-type early strength agent having a small particle size and capable of realizing good uniform redispersion is eventually obtained. When the spray hot-air drying process is used, the dispersant polycarboxylic acid and the stabilizer polyethylene glycol in the suspension achieve good dispersion and wrapping, making the aggregation of nanoparticles be suppressed during drying. By controlling an inlet temperature, an outlet temperature and the parameters of an atomizer, temperature-induced dehydration of calcium silicate hydrate is avoided to prevent influence on the performance of the crystal-nucleus-type early strength agent. Moreover, high drying efficiency is achieved, and the crystal-nucleus-type early strength powder having high dissolution performance and capable of realizing good uniform redispersion is prepared.

### DETAILED DESCRIPTION OF THE EMBODIMENTS

The present disclosure provides a polymeric dispersant, which is prepared from raw materials including, in parts by mass: 300-500 parts of a polyether monomer, 40-50 parts of acrylic acid, 15-20 parts of 2-acrylamido-2-methylpropanesulfonic acid, 1.0-1.5 parts of a free radical initiator, 0.6-1.0 part of a reducing agent, 2.0-3.2 parts of a chain transfer agent, 1.0-1.5 parts of a defoamer, 60-80 parts of a pH regulator, and 600-850 parts of water.

In the present disclosure, unless otherwise specified, all the raw materials used for the preparation are commercially available products well-known to those skilled in the art.

In the present disclosure, the raw materials for preparing the polymeric dispersant include 300-500 parts of a polyether monomer. In some embodiments, the raw materials for preparing the polymeric dispersant include 330, 350, 400, or 480 parts of the polyether monomer. In some embodiments, the polyether monomer is isopentenyl polyoxyethylene ether (TPEG) or ethylene glycol monovinyl polyvinyl alcohol ether (GPEG). In some embodiments, the polyether monomer has a weight-average molecular weight of 5,000 to 6,000, and preferably 5,300 or 5,500.

In the present disclosure, in some embodiments, the weight-average molecular weight of a polymer is determined by a gel permeation chromatography (GPC) under the following conditions: two columns connected in series being used as a chromatographic column, and 0.1 mol/L sodium nitrate solution being used as a mobile phase, a flow rate of 0.5 mL/min, a column temperature of 30 °C, and an injection volume of 20 µL, with reference materials of standard samples of polyethylene glycol-500, polyethylene glycol-1000, polyethylene glycol-2000, polyethylene glycol-5000, polyethylene glycol-10000, polyethylene glycol-50000, polyethylene glycol-100000, polyethylene glycol-200000 and polyethylene glycol-300000. In some embodiments, the weight-average molecular weight and a distribution index of the polymer are automatically calculated according to elution peaks of the polymer.

In the present disclosure, the raw materials for preparing the polymeric dispersant include 40-50 parts of acrylic acid. In some embodiments, the raw materials for preparing the polymeric dispersant include 43 or 45 parts of acrylic acid.

In the present disclosure, the raw materials for preparing the polymeric dispersant include 15-20 parts of 2-acrylamido-2-methylpropanesulfonic acid. In some embodiments, the raw materials for preparing the polymeric dispersant include 16 or 18 parts of 2-acrylamido-2-methylpropanesulfonic acid.

In the present disclosure, the raw materials for preparing the polymeric dispersant include 1.0-1.5 parts of a free radical initiator. In some embodiments, the raw materials for preparing the polymeric dispersant include 1.2 or 1.3 parts of the free radical initiator. In some embodiments, the free radical initiator is a peroxide. In some embodiments, the peroxide is hydrogen peroxide, potassium persulfate or ammonium persulfate. In the present disclosure, there is no particular limitation on the concentration of the peroxide.

In the present disclosure, the raw materials for preparing the polymeric dispersant include 0.6-1.0 part of a reducing agent. In some embodiments, the raw materials for preparing the polymeric dispersant include 0.7 or 0.8 parts of the reducing agent. In some embodiments, the reducing agent is an organic acid reducing agent. In some embodiments, the organic acid reducing agent is ascorbic acid.

In the present disclosure, the raw materials for preparing the polymeric dispersant include 2.0-3.2 parts of a chain transfer agent. In some embodiments, the raw materials for preparing the polymeric dispersant include 2.3, 2.5, or 3.0 parts of the chain transfer agent. In some embodiments, the chain transfer agent is mercaptopropionic acid. In some embodiments, a molar ratio of the chain transfer agent to the polyether monomer is in a range of less than 0.3.

In the present disclosure, the raw materials for preparing the polymeric dispersant include 1-1.5 parts of a defoamer. In some embodiments, the raw materials for preparing the polymeric dispersant include 1.2 or 1.3 parts of the defoamer. In some embodiments, the defoamer is a polyether defoamer or a polyether-modified organosilicon defoamer.

In the present disclosure, the raw materials for preparing the polymeric dispersant include 60-80 parts of a pH regulator. In some embodiments, the raw materials for preparing the polymeric dispersant include 65 or 70 parts of the pH regulator. In some embodiments, the pH regulator is a sodium hydroxide solution. In some embodiments, the concentration of the sodium hydroxide solution is in a range of 30-35 wt%.

In the present disclosure, the raw materials for preparing the polymeric dispersant include 600-850 parts of water. In some embodiments, the raw materials for preparing the polymeric dispersant include 640, 730, or 810 parts of water. In some embodiments, the water is deionized water having a conductivity less than 30 µs/cm.

In the present disclosure, the polymeric dispersant is prepared by a method including the following steps:
mixing the polyether monomer, 2-acrylamido-2-methylpropanesulfonic acid and deionized water to obtain a mixed solution of the polyether monomer;
dissolving acrylic acid in deionized water to obtain an acrylic acid solution;
dissolving the chain transfer agent and the reducing agent in deionized water to obtain a mixed solution;
mixing the free radical initiator and the polyether monomer solution, dropwise adding the acrylic acid solution and the mixed solution at the same time to obtain a mixture, and subjecting the mixture to a polymerization reaction after the dropwise adding is completed to obtain a reaction system; and
subjecting the reaction system to cooling to obtain a cooled system, adding a pH regulator to adjust the cooled system to have a pH value of 7.0, and then adding a defoamer to obtain a mixed system; and subjecting the mixed system to dilution to obtain the polymeric dispersant.

In the present disclosure, the mixing is carried out under stirring conditions. In some embodiments, the mixing is carried out under a stirring speed of 200-400 rpm, and preferably 250 rpm or 300 rpm. In some embodiments, the mixing is carried out under a temperature of 30-50 °C, and preferably 35 °C or 40 °C. In some embodiments, the dropwise adding of the acrylic acid solution is conducted for 2-3 hours, and the dropwise adding of the mixed solution is conducted for 3-4 hours. In some embodiments, the polymerization reaction is conducted for 1-3 hours, and preferably 1.5 hours or 2 hours. In some embodiments, the dilution is conducted until a resulting material has a solid content of 30-50%, and preferably 35 or 40%.

In the present disclosure, in some embodiments, a ratio of the total molar amount of acrylic acid and 2-acrylamido-2-methylpropanesulfonic acid to the molar amount of the polyether monomer is an acid-ether ratio of the polymeric dispersant. In some embodiments, the acid-ether ratio of the polymeric dispersant is in a range of 8-10 : 1, and preferably 9 : 1. In some embodiments, the polymeric dispersant has a weight-average molecular weight of 50,000-60,000, and preferably 51458, 52562, 55215, or 57436.

The present disclosure provides a crystal-nucleus-type early strength agent suspension, which is prepared from raw materials including, in parts by mass: 80-100 parts of the polymeric dispersant according to above technical solution, 20-30 parts of a stabilizer, 0.1 parts of a defoamer, 4-6 parts of sodium metaaluminate, 80-100 parts of a soluble silicate, 140-180 parts of a soluble calcium salt, and 600-700 parts of water, wherein the stabilizer is polyethylene glycol.

In the present disclosure, the raw materials for preparing the crystal-nucleus-type early strength agent suspension include 80-100 parts by mass of the polymeric dispersant. In some embodiments, the raw materials for preparing the crystal-nucleus-type early strength agent suspension include 85, 90, or 95 parts by mass of the polymeric dispersant.

In the present disclosure, the raw materials for preparing the crystal-nucleus-type early strength agent suspension include 20-30 parts by mass of a stabilizer. In some embodiments, the raw materials for preparing the crystal-nucleus-type early strength agent suspension include 23, 25, or 28 parts by mass of the stabilizer. In some embodiments, the stabilizer is polyethylene glycol. In some embodiments, the polyethylene glycol has a weight-average molecular weight of 10,000 to 12,000, and preferably 11,000.

In the present disclosure, the raw materials for preparing the crystal-nucleus-type early strength agent suspension include 0.1 parts by mass of a defoamer. In some embodiments, the defoamer is the same as the defoamer described above.

In the present disclosure, the raw materials for preparing the crystal-nucleus-type early strength agent suspension include 4-6 parts by mass of sodium metaaluminate. In some embodiments, the raw materials for preparing the crystal-nucleus-type early strength agent suspension include 5 or 6 parts by mass of sodium metaaluminate.

In the present disclosure, the raw materials for preparing the crystal-nucleus-type early strength agent suspension include 80-100 parts by mass of a soluble silicate. In some embodiments, the raw materials for preparing the crystal-nucleus-type early strength agent suspension include 85 or 90 parts by mass of the soluble silicate. In some embodiments, the soluble silicate is one or more selected from the group consisting of sodium silicate, sodium metasilicate and potassium silicate. In some embodiments, sodium metasilicate is sodium metasilicate pentahydrate.

In the present disclosure, the raw materials for preparing the crystal-nucleus-type early strength agent suspension include 140-180 parts by mass of a soluble calcium salt. In some embodiments, the raw materials for preparing the crystal-nucleus-type early strength agent suspension include 145, 150, 160, or 170 parts by mass of the soluble calcium salt. In some embodiments, the soluble calcium salt is one or more selected from the group consisting of calcium nitrate, calcium nitrite and calcium formate. In some embodiments, calcium nitrate is calcium nitrate tetrahydrate.

In the present disclosure, the raw materials for preparing the crystal-nucleus-type early strength agent suspension include 600-700 parts by mass of water. In some embodiments, the raw materials for preparing the crystal-nucleus-type early strength agent suspension include 630, 650, or 680 parts by mass of water. In some embodiments, the water is deionized water having a conductivity less than 30 µs/cm.

In the present disclosure, in some embodiments, a molar ratio of calcium in the soluble calcium salt to silicon in the soluble silicate salt is in a range of 1.5-1.7 : 1.

In the present disclosure, in some embodiments, the average particle size of a crystal-nucleus-type early strength agent in the crystal-nucleus-type early strength agent suspension is less than 200 nm, preferably 100-180 nm, and more preferably 119, 126, 138, 145 or 162 nm.

In the present disclosure, in some embodiments, the crystal-nucleus-type early strength agent suspension is prepared by a method including the following steps:
mixing a soluble calcium salt with deionized water to obtain a calcium salt solution, and mixing a soluble silicate salt with deionized water to obtain a silicate salt solution, wherein the mixing is conducted at a temperature of 60-80 °C, and preferably 65 or 70 °C;
mixing deionized water, a dispersant, a stabilizer and a defoamer to obtain a base material, wherein the mixing is carried out by using a high-speed disperser, and in some embodiments, the base material is obtained by first mixing deionized water, the dispersant and the stabilizer, then adding sodium metaaluminate thereto and then mixing a resulting mixture and the defoamer, the stirring being conducted at a rotation speed of 1500-2500 rpm for 30-60 min; and
dropwise adding the calcium salt solution and the silicate solution to the base material at the same time, and mixing to obtain the crystal-nucleus-type early strength agent suspension, wherein the dropwise adding is carried out by using a high-precision constant flow pump, the dropwise adding of the calcium salt solution is conducted for 3-6 hours, the dropwise adding of the silicate solution is conducted for 2-5 hours, and during the process of the dropwise adding, a molar ratio of calcium to silicon dripped per minute is controlled in a range of 1.1-1.3 by adjusting a dropwise adding time of the constant flow pump for the calcium salt solution.

The present disclosure provides a redispersible crystal-nucleus-type early strength powder, which is prepared from the crystal-nucleus-type early strength agent suspension as described in the above technical solution and an enhancer, wherein the enhancer is an alcohol-amine composite enhancer.

In the present disclosure, in some embodiments, the alcohol-amine composite enhancer includes, in parts by mass, 10-20 parts of a monoethanolamine, 15-25 parts of diethanolamine, 30-40 parts of N-methyldiethanolamine, and 25-35 parts of N,N-dimethylethanolamine.

In the present disclosure, in some embodiments, a mass ratio of the crystal-nucleus-type early strength agent suspension to the enhancer is in a range of 98-99 : 1-2.

The present disclosure provides a method for preparing the redispersible crystal-nucleus-type early strength powder as described in the above technical solution, including the following steps:
mixing a crystal-nucleus-type early strength agent suspension with an enhancer to obtain a mixture, and drying the mixture to obtain the redispersible crystal-nucleus-type early strength powder.

In the present disclosure, in some embodiments, a manner of drying includes one selected from the group consisting of spray freeze drying, spray hot-air drying and fluid bed drying. In some embodiments, the manner of drying is spray freeze drying or spray drying.

In the present disclosure, in some embodiments, the spray freeze drying includes the following steps:
pouring the crystal-nucleus-type early strength agent suspension and the enhancer into a material tank to obtain a mixture, and subjecting the mixture to atomization and spray-freezing to obtain ice crystals, wherein the crystal-nucleus-type early strength agent suspension and the enhancer are poured into the material tank in a feed flow rate of 20-30 mL/min; the atomization is conducted with a nozzle diameter of 0.2-0.5 mm; and the spray-freezing is conducted at a temperature of -5 °C to -25 °C; and
subjecting the ice crystals to low-temperature drying to obtain the redispersible crystal-nucleus-type early strength powder, wherein the low-temperature drying is conducted at a temperature of -40 °C to -30 °C and an air pressure of 10-20 Pa for 4-6 hours.

In the present disclosure, in some embodiments, the spray hot-air drying includes the following steps:
atomizing the crystal-nucleus-type early strength agent suspension and the enhancer to obtain mist droplets, wherein the atomizing is carried out by using an atomizer, the atomizer includes a centrifugal atomizer, a pressure nozzle, a swirl nozzle or an airflow nozzle, and the mist droplets have an average particle size of 10-300 µm;
drying the mist droplets with a dry gas to obtain a solid crystal-nucleus-type early strength agent, wherein the dry gas is an inert gas; the inert gas includes nitrogen or argon; the dry gas is introduced at an inlet temperature of 180-260 °C, and the dry gas is leaved at an outlet temperature of 80-120 °C. After drying, separating resulting particles from the dry gas by means of a cyclone separator and a bag filter.

In the present disclosure, in some embodiments, after drying, subjecting the resulting particles to a grinding step. There is no limitation on the method and conditions for the grinding, as long as a desired powder particle size can be obtained.

In the present disclosure, in some embodiments, a resulting ground redispersible crystal-nucleus-type early strength powder has an average particle size of 1-2 µm, and preferably 1.2, 1.4, or 1.8 µm.

The present disclosure provides use of the crystal-nucleus-type early strength agent suspension as described in the above technical solution, the redispersible crystal-nucleus-type early strength powder as described in the above technical solution or the redispersible crystal-nucleus-type early strength powder prepared by the method as described in the above technical solution in concrete or mortar.

In the present disclosure, in some embodiments, the crystal-nucleus-type early strength agent suspension is admixed in concrete or cement mortar in an amount of 3-6 wt% relative to a total amount of a cementitious material, and preferably in an amount of 3 wt%, 4 wt%, or 5 wt%.

In the present disclosure, in some embodiments, the redispersible crystal-nucleus-type early strength powder is admixed in concrete or cement mortar in an amount of 0.7-1.4 wt% relative to the total amount of the cementitious material, and preferably in an amount of 0.8 wt%, 1.0 wt%, or 1.2 wt%.

In order to further illustrate the present disclosure, the polymeric dispersant, the crystal-nucleus-type early strength agent suspension and the redispersible crystal-nucleus-type early strength powder, and the preparation methods and the use thereof provided in the present disclosure are described in detail below in conjunction with examples, but they cannot be construed as limiting the scope of the present disclosure.

### Example 1

410 parts of ethylene glycol monovinyl polyvinyl alcohol ether (GPEG, with a molecular weight of 5,000), 16 parts of 2-acrylamido-2-methylpropanesulfonic acid and 280 parts of deionized water (with a conductivity less than 30 µs/cm) were separately weighed and added to a reaction kettle to obtain a mixture. The mixture was heated to 40 °C and stirred by a stirrer with a rotation speed of 200 rpm until the mixture was completely dissolved.

42 parts of acrylic acid was dissolved in 24 parts of deionized water, and mixed evenly to obtain an acrylic acid solution.

2.5 parts of mercaptopropionic acid and 0.7 parts of ascorbic acid were dissolved in 50 parts of deionized water, and mixed evenly to obtain a mixed solution.

1.1 parts of hydrogen peroxide was added to the reaction kettle, and then the acrylic acid solution was added dropwise for 2.5 hours and the mixed solution was added dropwise for 3 hours simultaneously by using constant flow pumps.

After the mixed solution was completely added, a resulting mixture was subjected to a reaction at 40 °C for 1.5 hours to obtain a reaction system. The reaction system was naturally cooled to obtain a cooled system. Then, 50 parts of a regulator was added to the cooled system to adjust a pH value to 7.0. Then, 1 part of a defoamer was added thereto. Then, 344 parts of deionized water was added thereto to dilute a resulting material to a solid content of 40% to obtain a polymeric dispersant.

160 parts of calcium nitrate tetrahydrate and 70 parts of deionized water were mixed to prepare a calcium salt solution. 90 parts of sodium metasilicate pentahydrate and 260 parts of deionized water were mixed to prepare a silicate solution. The calcium salt solution was heated and stirred at 65 °C for 1 hour until the calcium nitrate tetrahydrate was completely dissolved. The silicate solution was heated and stirred at 65 °C for 1 hour until the sodium metasilicate pentahydrate was completely dissolved. Then, they were cooled to room temperature.

A high-speed stirrer was turned on with a rotation speed of a main shaft of 500 rpm. 305 parts of deionized water, 90 parts of the above polymeric dispersant and 20 parts of polyethylene glycol (with a weight-average molecular weight of 10,000) were slowly added to a reaction vessel, and then the rotation speed of stirring was increased to 2500 rpm at a constant rate. After the stirring was conducted for 30 min, 5 parts of sodium metaaluminate was added thereto, and 0.1 parts of a defoamer was added thereto, and then, a resulting mixture was stirred for another 5 min to obtain a base material.

The rotation speed of the main shaft was adjusted to 2500 rpm. The calcium salt solution and the silicate solution were simultaneously added to the base material at a constant rate by means of high-precision constant flow pumps, wherein the calcium salt solution was added for 6 hours, the silicate solution was added for 5 hours. In the course of the dropwise addition of the calcium salt solution and the silicate solution at the same time, a molar ratio of calcium to silicon dripped per minute was controlled to be 1.2 by adjusting the dropwise addition time of the constant flow pump for the calcium salt solution. After the silicate solution was added completely, the calcium salt solution was added continuously until the calcium salt solution was added completely.

After the calcium salt solution was added completed, a resulting mixture was stirred at a high speed for another 30 min. Then, the high-speed stirrer was turned off, and a resulting material was cooled to room temperature to obtain a milk white liquid, i.e., a crystal-nucleus-type early strength agent suspension.

15 parts of monoethanolamine, 20 parts of diethanolamine, 35 parts of N-methyldiethanolamine and 30 parts of N,N-dimethylethanolamine were weighed and mixed to obtain an enhancer.

98 parts of the above crystal-nucleus-type early strength agent suspension and 2 parts of the enhancer were weighed and mixed to obtain a mixture solution. Then, the mixture solution was passed through a centrifugal atomizer and dispersed into mist droplets having a particle size of 180 µm.

Under the condition of an inert N₂ gas, a dry gas was introduced at an inlet temperature of 210 °C, and the dry gas was leaved at an outlet temperature of 90 °C. The mist droplets came into contact with hot air, and moisture rapidly evaporated, thereby forming dry particles. The dry particles were separated from the dry air by means of a device such as a cyclone separator and a bag filter, thereby obtaining a crystal-nucleus-type early strength agent with an average particle size of 32 µm. Then, the crystal-nucleus-type early strength agent was placed into a ball mill and ground, thereby obtaining a redispersible crystal-nucleus-type early strength powder with an average particle size of 1.6 µm.

### Example 2

A powdery redispersible crystal-nucleus-type early strength powder was prepared according to the method described in example 1, except that the polymeric dispersant was prepared by the following steps:
360 parts of ethylene glycol monovinyl polyvinyl alcohol ether (GPEG, with a molecular weight of 5,000), 18 parts of 2-acrylamido-2-methylpropanesulfonic acid and 250 parts of deionized water were separately weighed and added to a reaction kettle to obtain a mixture. The mixture was heated to 40 °C and stirred by a stirrer with a rotation speed of 200 rpm until the mixture was completely dissolved.

46 parts of acrylic acid was dissolved in 25 parts of deionized water and mixed evenly to obtain an acrylic acid solution.

2.2 parts of mercaptopropionic acid and 0.8 parts of ascorbic acid were dissolved in 50 parts of deionized water and mixed evenly to obtain a mixed solution.

1.1 parts of hydrogen peroxide was added to the reaction kettle, and then the acrylic acid solution was added dropwise for 2.5 hours and the mixed solution was added dropwise for 3 hours simultaneously by using constant flow pumps.

After the mixed solution was added completely, a resulting mixture was subjected to a reaction at 40 °C for 1.5 hours to obtain a reaction system. The reaction system was naturally cooled to obtain a cooled system. Then, 55 parts of a regulator was added to the cooled system to adjust a pH value to 7.0. Then, 1 part of a defoamer was added thereto. Then, 307 parts of deionized water was added thereto to dilute a resulting material to a solid content of 40% to obtain the polymeric dispersant.

### Example 3

A powdery redispersible crystal-nucleus-type early strength powder was prepared according to the method described in example 1, except that the polymeric dispersant was prepared by the following steps:
490 parts of ethylene glycol monovinyl polyvinyl alcohol ether (GPEG, with a molecular weight of 6000), 15 parts of 2-acrylamido-2-methylpropanesulfonic acid and 330 parts of deionized water were separately weighed and added to a reaction kettle to obtain a mixture. The mixture was heated to 40 °C and stirred by a stirrer with a rotation speed of 200 rpm until the mixture was completely dissolved.

42 parts of acrylic acid was dissolved in 24 parts of deionized water and mixed evenly to obtain an acrylic acid solution.

2.5 parts of mercaptopropionic acid and 0.7 parts of ascorbic acid were dissolved in 50 parts of deionized water and mixed evenly to obtain a mixed solution.

1.1 parts of hydrogen peroxide was added to the reaction kettle, and then the acrylic acid solution was added dropwise for 2.5 hours and the mixed solution was added dropwise for 3 hours simultaneously by using constant flow pumps.

After the mixed solution was added completely, a resulting mixture was subjected to a reaction at 40 °C for 1.5 hours to obtain a reaction system. The reaction system was naturally cooled to obtain a cooled system. Then, 50 parts of a regulator was added to the cooled system to adjust a pH value to 7.0. Then, 1 part of a defoamer was added thereto. Then, 413 parts of deionized water was added thereto to dilute a resulting material to a solid content of 40% to obtain the polymeric dispersant.

### Example 4

A powdery redispersible crystal-nucleus-type early strength powder was prepared according to the method described in example 1, except that the polymeric dispersant was prepared by the following steps:
410 parts of isopentenyl polyoxyethylene ether (TPEG, with a molecular weight of 5,000), 16 parts of 2-acrylamido-2-methylpropanesulfonic acid and 280 parts of deionized water were separately weighed and added to a reaction kettle to obtain a mixture. The mixture was heated to 40 °C and stirred by a stirrer with a rotation speed of 200 rpm until the mixture was completely dissolved.

42 parts of acrylic acid was dissolved in 24 parts of deionized water and mixed evenly to obtain an acrylic acid solution.

2.5 parts of mercaptopropionic acid and 0.7 parts of ascorbic acid were dissolved in 50 parts of deionized water and mixed evenly to obtain a mixed solution.

1.1 parts of hydrogen peroxide was added to the reaction kettle, and then the acrylic acid solution was added dropwise for 2.5 hours and the mixed solution was added dropwise for 3 hours simultaneously by using constant flow pumps.

After the mixed solution was added completely, a resulting mixture was subjected to a reaction at 40 °C for 1.5 hours to obtain a reaction system. The reaction system was naturally cooled to obtain a cooled system. Then, 50 parts of a regulator was added to the cooled system to adjust a pH value to 7.0. Then, 1 part of a defoamer was added thereto. Then, 344 parts of deionized water was added thereto to dilute a resulting material to a solid content of 40% to obtain the polymeric dispersant.

### Comparative example 1

A powdery redispersible crystal-nucleus-type early strength powder was prepared according to the method described in example 1, except that the polymeric dispersant was prepared by the following steps:
520 parts of ethylene glycol monovinyl polyvinyl alcohol ether (GPEG, with a molecular weight of 5,000), 15 parts of 2-acrylamido-2-methylpropanesulfonic acid and 355 parts of deionized water were separately weighed and added to a reaction kettle to obtain a mixture. The mixture was heated to 40 °C and stirred by a stirrer with a rotation speed of 200 rpm until the mixture was completely dissolved.

40 parts of acrylic acid was dissolved in 24 parts of deionized water and mixed evenly to obtain an acrylic acid solution.

3.2 parts of mercaptopropionic acid and 0.7 parts of ascorbic acid were dissolved in 50 parts of deionized water and mixed evenly to obtain a mixed solution.

1.1 parts of hydrogen peroxide was added to the reaction kettle, and then the acrylic acid solution was added dropwise for 2.5 hours and the mixed solution was added dropwise for 3 hours simultaneously by using constant flow pumps.

After the mixed solution was added completely, a resulting mixture was subjected to a reaction at 40 °C for 1.5 hours to obtain a reaction system. The reaction system was naturally cooled to obtain a cooled system. Then, 48 parts of a regulator was added to the cooled system to adjust a pH value to 7.0. Then, 1 part of a defoamer was added thereto. Then, 430 parts of deionized water was added thereto to dilute a resulting material to a solid content of 40% to obtain the polymeric dispersant.

### Comparative example 2

A powdery redispersible crystal-nucleus-type early strength powder was prepared according to the method described in example 1, except that the polymeric dispersant was prepared by the following steps:
290 parts of ethylene glycol monovinyl polyvinyl alcohol ether (GPEG, with a molecular weight of 3000), 17 parts of 2-acrylamido-2-methylpropanesulfonic acid and 200 parts of deionized water were separately weighed and added to a reaction kettle to obtain a mixture. The mixture was heated to 40 °C and stirred by a stirrer with a rotation speed of 200 rpm until the mixture was completely dissolved.

50 parts of acrylic acid was dissolved in 30 parts of deionized water and mixed evenly to obtain an acrylic acid solution.

3.0 parts of mercaptopropionic acid and 0.7 parts of ascorbic acid were dissolved in 50 parts of deionized water and mixed evenly to obtain a mixed solution.

1.3 parts of hydrogen peroxide was added to the reaction kettle, and then the acrylic acid solution was added dropwise for 2.5 hours and the mixed solution was added dropwise for 3 hours simultaneously by using constant flow pumps.

After the mixed solution was added completely, a resulting mixture was subjected to a reaction at 40 °C for 1.5 hours to obtain a reaction system. The reaction system was naturally cooled to obtain a cooled system. Then, 48 parts of a regulator was added to the cooled system to adjust a pH value to 7.0. Then, 1 part of a defoamer was added thereto. Then, 250 parts of deionized water was added thereto to dilute a resulting material to a solid content of 40% to obtain the polymeric dispersant.

### Comparative example 3

A powdery redispersible crystal-nucleus-type early strength powder was prepared according to the method described in example 1, except that the polymeric dispersant was prepared by the following steps:
410 parts of ethylene glycol monovinyl polyvinyl alcohol ether (GPEG, with a molecular weight of 5,000), 16 parts of 2-acrylamido-2-methylpropanesulfonic acid and 280 parts of deionized water were separately weighed and added to a reaction kettle to obtain a mixture. The mixture was heated to 40 °C and stirred by a stirrer with a rotation speed of 200 rpm until the mixture was completely dissolved.

42 parts of acrylic acid was dissolved in 24 parts of deionized water and mixed evenly to obtain an acrylic acid solution.

1.8 parts of mercaptopropionic acid and 0.7 parts of ascorbic acid were dissolved in 40 parts of deionized water and mixed evenly to obtain a mixed solution.

1.3 parts of hydrogen peroxide was added to the reaction kettle, and then the acrylic acid solution was added dropwise for 2.5 hours and the mixed solution was added dropwise for 3 hours simultaneously by using constant flow pumps.

After the mixed solution was added completely, a resulting mixture was subjected to a reaction at 40 °C for 1.5 hours to obtain a reaction system. The reaction system was naturally cooled to obtain a cooled system. Then, 48 parts of a regulator was added to the cooled system to adjust a pH value to 7.0. Then, 1 part of a defoamer was added thereto. Then, 354 parts of deionized water was added thereto to dilute a resulting material to a solid content of 40% to obtain the polymeric dispersant.

### Comparative example 4

A powdery redispersible crystal-nucleus-type early strength powder was prepared according to the method described in example 1, except that the polymeric dispersant was prepared by the following steps:
410 parts of ethylene glycol monovinyl polyvinyl alcohol ether (GPEG, with a molecular weight of 5,000) and 270 parts of deionized water were separately weighed and added to a reaction kettle to obtain a mixture. The mixture was heated to 40 °C and stirred by a stirrer with a rotation speed of 200 rpm until the mixture was completely dissolved.

47 parts of acrylic acid was dissolved in 28 parts of deionized water and mixed evenly to obtain an acrylic acid solution.

2.5 parts of mercaptopropionic acid and 0.7 parts of ascorbic acid were dissolved in 50 parts of deionized water and mixed evenly to obtain a mixed solution.

1.1 parts of hydrogen peroxide was added to the reaction kettle, and then the acrylic acid solution was added dropwise for 2.5 hours and the mixed solution was added dropwise for 3 hours simultaneously by using constant flow pumps.

After the mixed solution was added completely, a resulting mixture was subjected to a reaction at 40 °C for 1.5 hours to obtain a reaction system. The reaction system was naturally cooled to obtain a cooled system. Then, 50 parts of a regulator was added to the cooled system to adjust a pH value to 7.0. Then, 1 part of a defoamer was added thereto. Then, 350 parts of deionized water was added thereto to dilute a resulting material to a solid content of 40% to obtain a polymeric dispersant.

### Example 5

A redispersible crystal-nucleus-type early strength powder was prepared according to the method as described in example 1, except that the crystal-nucleus-type early strength agent suspension was prepared by the following mass parts of the raw materials:
100 parts of the polymeric dispersant, 20 parts of polyethylene glycol (with a molecular weight of 10,000), 0.1 parts of the defoamer, 6 parts of sodium metaaluminate, 90 parts of sodium metasilicate pentahydrate, 160 parts of calcium nitrate tetrahydrate, and 624 parts of deionized water.

### Comparative example 5

A redispersible crystal-nucleus-type early strength powder was prepared according to the method as described in example 1, except that the crystal-nucleus-type early strength agent suspension was prepared by the following mass parts of the raw materials:
70 parts of the polymeric dispersant, 20 parts of polyethylene glycol (with a molecular weight of 10,000), 0.1 parts of the defoamer, 4 parts of sodium metaaluminate, 90 parts of sodium metasilicate pentahydrate, 160 parts of calcium nitrate tetrahydrate, and 656 parts of deionized water.

### Comparative example 6

A redispersible crystal-nucleus-type early strength powder was prepared according to the method as described in example 1, except that the crystal-nucleus-type early strength agent suspension was prepared by the following mass parts of the raw materials:
110 parts of the polymeric dispersant, 20 parts of polyethylene glycol (with a molecular weight of 10,000), 0.1 parts of the defoamer, 5 parts of sodium metaaluminate, 90 parts of sodium metasilicate pentahydrate, 160 parts of calcium nitrate tetrahydrate, and 615 parts of deionized water.

### Example 6

A redispersible crystal-nucleus-type early strength powder was prepared according to the method as described in example 1, except that the crystal-nucleus-type early strength agent suspension was prepared by the following mass parts of the raw materials:
90 parts of the polymeric dispersant, 30 parts of polyethylene glycol (with a molecular weight of 10,000), 0.1 parts of the defoamer, 5 parts of sodium metaaluminate, 90 parts of sodium metasilicate pentahydrate, 160 parts of calcium nitrate tetrahydrate, and 625 parts of deionized water.

### Comparative example 7

A redispersible crystal-nucleus-type early strength powder was prepared according to the method as described in example 1, except that the crystal-nucleus-type early strength agent suspension was prepared by the following mass parts of the raw materials:
90 parts of the polymeric dispersant, 20 parts of polyethylene glycol (with a molecular weight of 10,000), 0.1 parts of the defoamer, 90 parts of sodium metasilicate pentahydrate, 160 parts of calcium nitrate tetrahydrate, and 640 parts of deionized water.

### Comparative example 8

A redispersible crystal-nucleus-type early strength powder was prepared according to the method as described in example 1, except that the crystal-nucleus-type early strength agent suspension was prepared by the following mass parts of the raw materials:
90 parts of the polymeric dispersant, 0.1 parts of the defoamer, 5 parts of sodium metaaluminate, 90 parts of sodium metasilicate pentahydrate, 160 parts of calcium nitrate tetrahydrate, and 655 parts of deionized water.

### Comparative example 9

A redispersible crystal-nucleus-type early strength powder was prepared according to the method as described in example 1, except that the crystal-nucleus-type early strength agent suspension was prepared by the following mass parts of the raw materials:
90 parts of the polymeric dispersant, 20 parts of polyethylene glycol (with a molecular weight of 8000), 0.1 parts of the defoamer, 5 parts of sodium metaaluminate, 90 parts of sodium metasilicate pentahydrate, 160 parts of calcium nitrate tetrahydrate, and 635 parts of deionized water.

### Example 7

A redispersible crystal-nucleus-type early strength powder was prepared according to the method as described in example 1, except that 99 parts of the crystal-nucleus-type early strength agent suspension and 1 part of the enhancer were used.

### Comparative example 10

A redispersible crystal-nucleus-type early strength powder was prepared according to the method as described in example 1, except that 97 parts of the crystal-nucleus-type early strength agent suspension and 3 parts of the enhancer were used.

### Comparative example 11

A crystal-nucleus-type early strength powder was prepared according to the method as described in example 1, except that no enhancer was added.

### Comparative example 12

A crystal-nucleus-type early strength powder of the same kind that was normally sold on the market was purchased.

### Example 8

Example 8 was conducted according to the method of Example 1, except that the redispersible crystal-nucleus-type early strength powder was prepared by using a spray-freezing process, which was conducted as follows:
The crystal-nucleus-type early strength agent suspension and the enhancer were introduced into a material tank, with a feed flow rate of 25 mL/min. The nozzle of atomizer had a diameter of 0.4 mm. The crystal-nucleus-type early strength agent suspension was atomized into tiny droplets, and the tiny droplets were spray-freezed at -30 °C to form small ice crystals.

The small ice crystals formed by the spray-freezing were dried at -35 °C and 15 Pa for 5 hours to prepare the redispersible crystal-nucleus-type early strength powder.

### Test example 1

In order to compare the dispersion stability and early strength properties of crystal-nucleus-type early strength agent suspensions prepared from polymeric dispersants having molecular structures with different acid-ether ratios, different side chain lengths and different backbone lengths, the crystal-nucleus-type early strength agent suspensions prepared in examples 1-4 and comparative examples 1-3 were subjected to performance test, which was conducted as follows:
(1) The weight-average molecular weight of the polymeric dispersants was determined by means of gel permeation chromatography (GPC), wherein the chromatographic column was composed of 2 columns connected in series, a mobile phase was a 0.1 mol/L sodium nitrate solution, a flow rate was 0.5 mL/min, a column temperature was 30 °C, and an injection volume was 20 µL. Standard samples of reference materials were polyethylene glycol-500, polyethylene glycol-1000, polyethylene glycol-2000, polyethylene glycol-5000, polyethylene glycol-10000, polyethylene glycol-50000, polyethylene glycol-100000, polyethylene glycol-200000, and polyethylene glycol-300000. Relative molecular weight and distribution index of the polymers were automatically calculated from elution peaks of the polymers. Reaction conversion rates of the polymeric dispersants were estimated on the basis of the areas of the elution peaks and retention time.
(2) The crystal-nucleus-type early strength agent suspensions prepared in examples 1-4 and comparative examples 1-3 were diluted by a factor of 10 with deionized water, without an ultrasonic treatment to obtain suspension dispersion systems. Then, the nanoparticle sizes of the suspension dispersion systems were measured by means of a Zetasizer NANOS90 nanoparticle size analyzer, and average nanoparticle sizes were obtained in three consecutive measurements;
(3) 1 kg of the crystal-nucleus-type early strength agent suspensions were taken in beakers, and leaved to stand at ambient temperature for 120 days, then, sedimentation rates at the bottoms of the beakers were determined.
(4) 900 g of cement (ordinary Portland cement PO42.5R produced by Sichuan Esheng Cement Group Co., Ltd., China), 1350 g of standard sand (produced by Xiamen Iso Standard Sand Co., Ltd., China), 284 g of water and 27 g of the crystal-nucleus-type early strength agent suspensions were weighed, and mixed evenly to obtain mortars, wherein in a blank group, the crystal-nucleus-type early strength agent suspension was not added. The mortars were molded into cement-sand test blocks under the same water-cement ratio, and cured under standard curing conditions for 8 hours and 24 hours. Then, the compressive strength of resulting blocks was determined according to GB/T 17671-2021 Test Method for strength of cement mortar (ISO Method).

The test results are shown in Table 1.

**Table 1 Results of performance tests of crystal-nucleus-type early strength agent suspensions obtained in examples 1-4 and comparative examples 1-3**

| Source | Polymeric dispersant | | | | Average particle size (nm) | Sedimentation rate after 120 days (%) | Compressive strength (MPa) | |
|---|---|---|---|---|---|---|---|---|
| | Polyether macromo nomer | Acid-ether ratio | Side-chain molecular weight | Polymeric dispersant Molecular weight | | | 8 h | 24 h |
| Blank group | - | - | - | - | - | - | 3.6 | 16.4 |
| Example 1 | GPEG | 8:1 | 5000 | 51458 | 145 | 0.2 | 8.6 | 36.5 |
| Example 2 | GPEG | 10 : 1 | 5000 | 57436 | 119 | 0.2 | 9.4 | 37.6 |
| Example 3 | GPEG | 8 : 1 | 6000 | 55215 | 126 | 0.2 | 8.7 | 35.3 |
| Example 4 | TPEG | 8 : 1 | 5000 | 52562 | 138 | 0.2 | 8.5 | 35.1 |
| Comparative example 1 | GPEG | 6 : 1 | 5000 | 48368 | 378 | 2.8 | 6.4 | 29.3 |
| Comparative example 2 | GPEG | 8 : 1 | 3000 | 45632 | 353 | 2.2 | 7.2 | 30.2 |
| Comparative example 3 | GPEG | 8 : 1 | 5000 | 87586 | 328 | 2.1 | 7.3 | 29.8 |
| Comparative example 4 | GPEG | 8 : 1 | 5000 | 53165 | 192 | 0.2 | 7.8 | 33.2 |

As can be seen from the results in Table 1, crystal-nucleus-type early strength agent suspensions prepared from high-molecular polymeric dispersants that have a structure with a high acid ether ratio, long side chains and a short backbone in the examples of the present disclosure have better dispersion stability and higher early-age strength. As can be seen from the results of example 1 and comparative example 4, the functional groups of 2-acrylamido-2-methylpropanesulfonic acid contribute to the development of early-age strength.

### Test example 2

In order to compare the dispersion stability and early strength properties of crystal-nucleus-type early strength agent suspensions prepared from a dispersant and a stabilizer at different dosages, the crystal-nucleus-type early strength agent suspensions prepared in examples 1, 5 and 6 and comparative examples 4-7 were subjected to the following performance test, and the specific test method was conducted according to test example 1. The test results are shown in Table 2.

**Table 2 Results of performance tests of crystal-nucleus-type early strength agent suspensions obtained in examples 1, 5 and 6 and comparative examples 4-7**

| Source | Parts by weight of polymeric dispersant | Stabilizer | | Particle size (nm) | Sedimentation rate after 120 days (%) | Compressive strength (MPa) | |
|---|---|---|---|---|---|---|---|
| | | Molecular weight | Parts by weight | | | 8 h | 24 h |
| Blank group | - | - | - | - | - | 3.6 | 16.4 |
| Example 1 | 90 | 10000 | 20 | 145 | 0.2 | 8.6 | 36.5 |
| Example 5 | 100 | 10000 | 20 | 108 | 0.1 | 8.2 | 33.4 |
| Example 6 | 90 | 10000 | 30 | 156 | 0.2 | 8.9 | 36.5 |
| Comparative example 5 | 70 | 10000 | 20 | 649 | 3.8 | 5.4 | 22.4 |
| Comparative example 6 | 110 | 10000 | 20 | 94 | 0.1 | 7.3 | 31.2 |
| Comparative example 7 | 90 | 10000 | 20 | 152 | 0.2 | 6.8 | 31.7 |
| Comparative example 8 | 90 | 10000 | 0 | 323 | 2.5 | 7.2 | 30.4 |
| Comparative example 9 | 90 | 8000 | 20 | 328 | 2.4 | 7.3 | 29.6 |

As can be seen from the results in Table 2, the crystal-nucleus-type early strength agent suspensions synthesized from the dispersant and the stabilizer at certain dosages of the present disclosure have better dispersion stability and higher early-age strength. Changes in the dosages of the dispersant, the molecular weight of the stabilizer and sodium metaaluminate in the comparative examples have a large influence on the dispersion stability and early-age strength of the crystal-nucleus-type early strength agents.

### Test example 3

In order to compare the dispersion stability and early strength properties of crystal-nucleus-type early strength agent suspensions and redispersible crystal-nucleus-type early strength powders prepared from an enhancer at different dosages, the crystal-nucleus-type early strength agent suspensions and redispersible crystal-nucleus-type early strength powders prepared in examples 1 and 7 and comparative examples 8 and 9 were subjected to the following performance test, and the specific test method was conducted according to test example 1. The test results are shown in Table 3.

**Table 3 Results of performance tests of crystal-nucleus-type early strength agent suspensions and early strength powders obtained in examples 1 and 7 and comparative examples 8 and 9**

| No. | Parts by weight of enhancer | Particle size | Sedimentation rate after 120 days (%) | Compressive strength/MPa | |
|---|---|---|---|---|---|
| | | | | 8 h | 24 h |
| Blank group | - | - | - | 3.6 | 16.4 |
| Example 1 - Suspension | 2 | 145 nm | 0.2 | 8.6 | 36.5 |
| Example 7 - Suspension | 1 | 158 nm | 0.2 | 9.2 | 36.9 |
| Comparative example 10 - | 3 | 168 nm | 0.2 | 7.8 | 32.3 |
| Suspension | | | | | |
| Comparative example 11 - Suspension | 0 | 152 nm | 0.2 | 7.1 | 31.8 |
| Example 1 - Early strength powder | 2 | 0.6 µm | - | 7.4 | 33.8 |
| Example 7 - Early strength powder | 1 | 0.6 µm | - | 7.8 | 32.4 |
| Comparative example 10 - Early strength powder | 3 | 0.5 µm | - | 6.4 | 27.8 |
| Comparative example 11 - Early strength powder | 0 | 0.7 µm | - | 5.7 | 25.4 |
| Comparative example 12 - Early strength powder | - | 0.5 µm | - | 5.2 | 24.6 |

As can be seen from the results in Table 3, the crystal-nucleus-type early strength agent suspensions synthesized from the stabilizer at a certain dosage of the present disclosure have good dispersion stability and higher early-age strength. The redispersible crystal-nucleus-type early strength powders formed by drying same into powder can save on considerable transportation costs in engineering applications, and have early strength properties that are slightly reduced rather than being significantly degraded compared with the suspensions. The redispersible crystal-nucleus-type early strength powder of the present disclosure has significantly improved early strength performance compared with redispersible crystal-nucleus-type early strength powders of the same kind that are normally sold on the market. Changes in the dosages of the enhancer in the comparative examples have a large effect on the early-age strength of the redispersible crystal-nucleus-type early strength powders.

### Test example 4

In order to compare the dispersion stability and early strength effects of redispersible crystal-nucleus-type early strength powders prepared by using difference preparation processes, the redispersible crystal-nucleus-type early strength powders prepared in examples 1 and 8 were subjected to the following performance test, and the specific test method was conducted according to test example 1. The test results are shown in Table 4.

**Table 4 Results of performance tests of crystal-nucleus-type early strength agent suspensions and early strength powders obtained in examples 1 and 8**

| Source | Drying process | Particle size | Compressive strength/MPa | |
|---|---|---|---|---|
| | | | 8 h | 24 h |
| Blank group | - | - | 3.6 | 16.4 |
| Example 1 - Suspension | - | 145 nm | 8.6 | 36.5 |
| Example 8 - Suspension | - | 136 nm | 8.2 | 36.2 |
| Example 1 - Early strength powder | Spray drying | 1.6 µm | 7.4 | 33.8 |
| Example 8 - Early strength powder | Spray freeze drying | 1.3 µm | 8.0 | 34.6 |
| Comparative example 12 - Early strength powder | - | 1.8 µm | 5.2 | 24.6 |

As can be seen from the results in Table 4, the redispersible crystal-nucleus-type early strength powders prepared by means of spray hot-air drying and spray freeze drying of the present disclosure have good performance, and advantages of a low dosage and high early-age strength. The redispersible crystal-nucleus-type early strength powders of the present disclosure show significantly improved early strength properties compared with redispersible crystal-nucleus-type early strength powders of the same kind that are normally sold on the market.

Although the examples described above have provided a detailed description of the present disclosure, they are only some, rather than all of the examples of the present disclosure. All other examples that can be obtained according to the examples of the present disclosure without any inventive effort shall fall within the scope of the present disclosure.

## Claims

1. A polymeric dispersant, wherein the polymeric dispersant is prepared from raw materials comprising, in parts by mass:
300-500 parts of a polyether monomer, 40-50 parts of acrylic acid, 15-20 parts of 2-acrylamido-2-methylpropanesulfonic acid, 1.0-1.5 parts of a free radical initiator, 0.6-1.0 part of a reducing agent, 2.0-3.2 parts of a chain transfer agent, 1.0-1.5 parts of a defoamer, 60-80 parts of a pH regulator, and 600-850 parts of water.

2. The polymeric dispersant of claim 1, wherein the polyether monomer is selected from the group consisting of isopentenyl polyoxyethylene ether and ethylene glycol monovinyl polyvinyl alcohol ether; and
the polyether monomer has a weight-average molecular weight of 5,000 to 6,000.

3. The polymeric dispersant of claim 1, wherein
the chain transfer agent is mercaptopropionic acid;
the initiator is a peroxide;
the reducing agent is an organic acid reducing agent;
the pH regulator is a sodium hydroxide solution;
the water is deionized water having a conductivity less than 30 µs/cm; and
the defoamer is selected from the group consisting of a polyether defoamer and a polyether-modified organosilicon defoamer.

4. A crystal-nucleus-type early strength agent suspension, wherein the crystal-nucleus-type early strength agent suspension is prepared from raw materials comprising, in parts by mass:
80-100 parts of the polymeric dispersant of any one of claims 1 to 3, 20-30 parts of a stabilizer, 0.1 parts of a defoamer, 4-6 parts of sodium metaaluminate, 80-100 parts of a soluble silicate, 140-180 parts of a soluble calcium salt, and 600-700 parts of water, the stabilizer being polyethylene glycol.

5. The crystal-nucleus-type early strength agent suspension of claim 4, wherein the polyethylene glycol has a weight-average molecular weight of 10,000-12,000.

6. The crystal-nucleus-type early strength agent suspension of claim 4, wherein the soluble silicate is one or more selected from the group consisting of sodium silicate, sodium metasilicate and potassium silicate; and
the soluble calcium salt is one or more selected from the group consisting of calcium nitrate, calcium nitrite and calcium formate.

7. A redispersible crystal-nucleus-type early strength powder, wherein the redispersible crystal-nucleus-type early strength powder is prepared from the crystal-nucleus-type early strength agent suspension of any one of claims 4 to 6 and an enhancer, the enhancer being an alcohol-amine composite enhancer.

8. The redispersible crystal-nucleus-type early strength powder of claim 7, wherein a mass ratio of the crystal-nucleus-type early strength agent suspension to the enhancer is in a range of 98-99 : 1-2.

9. A method for preparing the redispersible crystal-nucleus-type early strength powder of claim 7 or 8, comprising:
mixing the crystal-nucleus-type early strength agent suspension and the enhancer to obtain a mixture, and drying the mixture to obtain the redispersible crystal-nucleus-type early strength powder,
wherein the drying comprises one selected from the group consisting of spray freeze drying, spray hot-air drying and fluid bed drying.

10. Use of the crystal-nucleus-type early strength agent suspension of any one of claims 4 to 6, the redispersible crystal-nucleus-type early strength powder of any one of claims 7 to 8 or the redispersible crystal-nucleus-type early strength powder prepared by the method of claim 9 in concrete or mortar.
